# EUROPEAN PATENT APPLICATION

(11) **EP 4 614 834 A1**
(43) Date of publication of application: **10.09.2025**
(21) Application number: 22964494.3
(22) Date of filing: 04.11.2022
(51) Int. Cl.: H04B 7/08, H04B 7/06

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/041237
(87) International publication number: WO 2024/095478

(57) **Abstract**

A terminal according to one aspect of the present disclosure includes: a receiving section that receives at least one of a first downlink (DL) signal scheduled or triggered by first downlink control information (DCI) corresponding to a first control resource set pool index and a second downlink (DL) signal scheduled or triggered by second downlink control information (DCI) corresponding to a second control resource set pool index; and a control section that applies, when one unified Transmission Configuration Indication (TCI state) is indicated for each of the first control resource set pool index and the second control resource set pool index, both a first TCI state corresponding to the first control resource set pool index and a second TCI state corresponding to the second control resource set pool index or one of the first TCI state and the second TCI state, to the first DL signal or the second DL signal.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption/Transmission Configuration Indication (TCI) state/spatial relation).

It is studied to apply a configured/activated/indicated TCI state to a plurality of types of signals (channels/RSs). However, a method of applying such a TCI state is not clear for some cases. Unless a method of indicating a TCI state is clear, degradation in communication quality, throughput reduction, and the like may occur.

Thus, an object of the present disclosure is to provide a terminal, a radio communication method, and a base station that enable appropriate application of a TCI state.

### Solution to Problem

A terminal according to one aspect of the present disclosure includes: a receiving section that receives at least one of a first downlink (DL) signal scheduled or triggered by first downlink control information (DCI) corresponding to a first control resource set pool index and a second downlink (DL) signal scheduled or triggered by second downlink control information (DCI) corresponding to a second control resource set pool index; and a control section that applies, when one unified Transmission Configuration Indication (TCI state) is indicated for each of the first control resource set pool index and the second control resource set pool index, both a first TCI state corresponding to the first control resource set pool index and a second TCI state corresponding to the second control resource set pool index or one of the first TCI state and the second TCI state, to the first DL signal or the second DL signal.

### Advantageous Effects of Invention

According to one aspect of the present disclosure, it is possible to appropriately apply a TCI state(s).

### Brief Description of Drawings

[FIG. 1] FIG. 1A and FIG. 1B show examples of a unified/common TCI framework.
[FIG. 2] FIG. 2A and FIG. 2B show examples of DCI-based TCI state indication.
[FIG. 3] FIG. 3 shows an example of application time for unified TCI state indication.
[FIG. 4] FIG. 4A to FIG. 4D are diagrams to show examples of multi-TRPP
[FIG. 5] FIG. 5A to FIG. 5C are diagrams to show an example of application of an indicated TCI state.
[FIG. 6] FIG. 6 is a diagram to show an example of a case where a UE cannot determine a CORESET (or DCI) to be a schedule target of a PDSCH.
[FIG. 7] FIG. 7A to FIG. 7C are diagrams to show an example of application of an indicated TCI state(s) according to a first embodiment.
[FIG. 8] FIG. 8A and FIG. 8B are diagrams to show another example of the application of an indicated TCI state(s) according to the first embodiment.
[FIG. 9] FIG. 9A and FIG. 9B are diagrams to show another example of the application of an indicated TCI state(s) according to the first embodimenty
[FIG. 10] FIG. 10 is a diagram to show an example of application of an indicated TCI state(s) according to a second embodiment.
[FIG. 11] FIG. 11 is a diagram to show another example of the application of an indicated TCI state(s) according to the second embodiment.
[FIG. 12] FIG. 12 is a diagram to show another example of the application of an indicated TCI state(s) according to the second embodiment.
[FIG. 13] FIG. 13 is a diagram to show another example of the application of an indicated TCI state(s) according to the second embodiment.
[FIG. 14] FIG. 14 is a diagram to show an example of QCL assumption of PDCCHs according to a third embodimentd
[FIG. 15] FIG. 15 is a diagram to show another example of the QCL assumption of PDCCHs according to the third embodiment.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

### {Physical Layer Procedure/Antenna Port QCL for Data}

The UE can be configured with a list of up to M TCI-State (TCI state) configurations in a higher layer parameter "PDSCH-Config" for decoding of a PDSCH, in accordance with a detected PDCCH with DCI for the UE and a given serving cell. Here, M depends on a UE capability "maxNumberConfiguredTCIstatesPerCC."

Each TCI-State includes a parameter for configuration of a QCL relationship between one or two downlink reference signals and a DMRS port for a PDSCH, a DMRS port for a PDCCH, or a CSI-RS port for a CSI-RS resource. The QCL relationship is configured by a higher layer parameter "qcl-Type1" for a first DL RS and a higher layer parameter "qcl-Type2" for a second DL RS (if configured).

In a case of two DL RSs, a plurality of QCL types are not the same irrespective of whether reference is reference to the same DL RS or reference to different DL RSs. A QCL type corresponding to each DL RS is given by a higher layer parameter "qcl-Type" in QCL-Info, and takes one of the following values.
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

### {RRC Protocol Specification/RRC IE/TCI State}

A TCI-State (TCI state) associates one or two DL reference signals (RSs) with a corresponding QCL type. If an additional physical cell identifier (PCI) is configured for the RS, the same value is configured for both of the DL RSs.

### (Default TCI State/Default Spatial Relation/Default PL-RS)

In Rel. 16, a PDSCH may be scheduled by DCI including a TCI field. A TCI state for the PDSCH is indicated by the TCI field. A TCI field in DCI format 1_1 is of 3 bits, and a TCI field in DCI format 1_2 is of 3 bits at maximum.

In the RRC connected mode, if a first TCI-present-in-DCI information element (higher layer parameter tci-PresentInDCI) is set at "enabled" for a CORESET for scheduling a PDSCH, a UE assumes that a TCI field is present in DCI format 1_1 for a PDCCH to be transmitted in the CORESET.

If a second TCI-present-in-DCI information element (higher layer parameter tci-PresentInDCI-1_2) for a CORESET for scheduling a PDSCH is configured for a UE, the UE assumes that a TCI field having a DCI field size indicated by the second TCI-present-in-DCI information element is present in DCI format 1_2 for the PDSCH to be transmitted in the CORESET.

In Rel. 16, a PDSCH may be scheduled by DCI including no TCI field. A DCI format of the DCI may be DCI format 1_0 or DCI format 1_1/1_2 of a case where no TCI-present-in-DCI information element (higher layer parameter tci-PresentInDCI or tci-PresentInDCI-1-2) is configured (enabled). If a time offset between reception of DL DCI (DCI for scheduling a PDSCH (scheduling DCI)) and a corresponding PDSCH (PDSCH scheduled by the DCI) is equal to or larger than a threshold value (timeDurationForQCL) in a case where a PDSCH is scheduled by DCI including no TCI field, a UE assumes that a TCI state or QCL assumption for the PDSCH is the same as the TCI state or QCL assumption (default TCI state) of a CORESET (for example, scheduling DCI).

In the RRC connected mode, in both cases where TCI-present-in-DCI information elements (higher layer parameters tci-PresentInDCI and tci-PresentInDCI-1-2) is set at "enabled" and where no TCI-present-in-DCI information element is configured, when a time offset between reception of DL DCI (DCI for scheduling a PDSCH) and the corresponding PDSCH (PDSCH scheduled by the DCI) is smaller than a threshold value (timeDurationForQCL) (application condition, first condition), a TCI state (default TCI state) of the PDSCH may be the TCI state having the lowest CORESET ID in the latest slot in an active DL BWP of a corresponding CC (of a specific UL signal) in a case of non-cross-carrier scheduling. Otherwise, the TCI state (default TCI state) of the PDSCH may be the TCI state having the lowest TCI state ID of a PDSCH in an active DL BWP of a scheduled CC.

In Rel. 15, individual MAC CEs including a MAC CE for activation/deactivation of a PUCCH spatial relation and a MAC CE for activation/deactivation of an SRS spatial relation are needed. A PUSCH spatial relation conforms to the SRS spatial relation.

In Rel. 16, at least one of a MAC CE for activation/deactivation of a PUCCH spatial relation and a MAC CE for activation/deactivation of an SRS spatial relation need not be used.

If neither a spatial relation nor a PL-RS for a PUCCH is configured in FR2 (application condition, second condition), default assumptions of a spatial relation and a PL-RS (default spatial relation and default PL-RS) are applied to the PUCCH. If neither a spatial relation nor a PL-RS for an SRS (SRS resource for the SRS or SRS resource corresponding to an SRI in DCI format 0_1 for scheduling a PUSCH) is configured in FR2 (application condition, second condition), default assumptions of a spatial relation and a PL-RS (default spatial relation and default PL-RS) are applied to the PUSCH scheduled by DCI format 0_1 and the SRS.

If a CORESET is configured in an active DL BWP of the CC (application condition), the default spatial relation and the default PL-RS may correspond to the TCI state or the QCL assumption of the CORESET having the lowest CORESET ID in the active DL BWP. If no CORESET is configured in an active DL BWP of the CC, the default spatial relation and the default PL-RS may correspond to the active TCI state having the lowest ID of a PDSCH in the active DL BWP.

In Rel. 15, a spatial relation of a PUSCH scheduled by DCI format 0_0 conforms to a spatial relation of a PUCCH resource having the lowest PUCCH resource ID among active spatial relations of PUCCHs of the same CC. Even when no PUCCH is transmitted in an SCell, a network need update all PUCCH spatial relations in the SCell.

In Rel. 16, no PUCCH configuration for a PUSCH scheduled by DCI format 0_0 is needed. When no active PUCCH spatial relation or no PUCCH resource is present in an active UL BWP of a corresponding CC for a PUSCH scheduled by DCI format 0_0 (application condition, second condition), a default spatial relation and a default PL-RS are applied to the PUSCH.

An application condition for a default spatial relation/default PL-RS for SRS may include that an enable-default-beam-pathloss-for-SRS information element (higher layer parameter enableDefaultBeamPlForSRS) is set at enabled. An application condition for a default spatial relation/default PL-RS for PUCCH may include that an enable-default-beam-pathloss-for-PUCCH information element (higher layer parameter enableDefaultBeamPlForPUCCH) is set at enabled. An application condition for a default spatial relation/default PL-RS for PUSCH scheduled by DCI format 0_0 may include that an enable-default-beam-pathloss-for-PUSCH information element, the PUSCH being scheduled by DCI format 0_0, (higher layer parameter enableDefaultBeamPlForPUSCH0_0) is set at enabled.

In Rel. 16, when an RRC parameter (parameter that enables a default beam PL for PUCCH (enableDefaultBeamPL-ForPUCCH), a parameter that enables a default beam PL for PUSCH (enableDefaultBeamPL-ForPUSCH0_0), or a parameter that enables a default beam PL for SRS (enableDefaultBeamPL-ForSRS)) is configured and no spatial relation or PL-RS is configured, for a UE, the UE applies a default spatial relation/PL-RS.

The threshold value may be referred to as a time duration for QCL, "timeDurationForQCL," "Threshold," "Threshold for offset between a DCI indicating a TCI state and a PDSCH scheduled by the DCI," "Threshold-Sched-Offset," "beamSwitchTiming," a schedule offset threshold value, a scheduling offset threshold value, and the like. The threshold value may be reported as a UE capability (for each subcarrier spacing) by a UE.

In a case where an offset (scheduling offset) between reception of DL DCI and a PDSCH corresponding to the DL DCI is smaller than a threshold value timeDurationForQCL, where at least one TCI state configured for the serving cell of a scheduled PDSCH includes "QCL type D," where a UE is configured with an enable-two-default-TCI information element (enableTwoDefaultTCIStatesr16), and where at least one TCI codepoint (codepoint of a TCI field in the DL DCI) indicates two TCI states, the UE assumes that a DMRS port of the PDSCH of the serving cell or a PDSCH transmission occasion is QCLed (quasi co-located) with an RS related to a QCL parameter associated with two TCI states corresponding to the lowest codepoint of TCI codepoints including two different TCI states (2-default-QCL-assumption determination rule). The enable-2-default-TCI information element indicates that Rel-16 operation for two default TCI states for PDSCH when at least one TCI codepoint is mapped to two TCI states is enabled.

As a default TCI state of a PDSCH in Rel. 15/16, specifications of a default TCI state for single TRP, a default TCI state for multi-DCI based multi-TRP, and a default TCI state for single-DCI based multi-TRP are drafted.

As a default TCI state of an aperiodic CSI-RS (A-CSI-RS) in Rel. 15/16, specifications of a default TCI state for single TRP, a default TCI state for multi-DCI based multi-TRP, and a default TCI state for single-DCI based multi-TRP are drafted.

Specifications of a default spatial relation and a default PL-RS for each PUSCH/PUCCH/SRS in Rel. 15/16 are drafted.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For example, one common beam being indicated by RRC/MAC CE/DCI may be supported, and the one common beam may be applied to a plurality of DL/UL channels/reference signals. For Rel. 18 or later versions, another case may be supported.

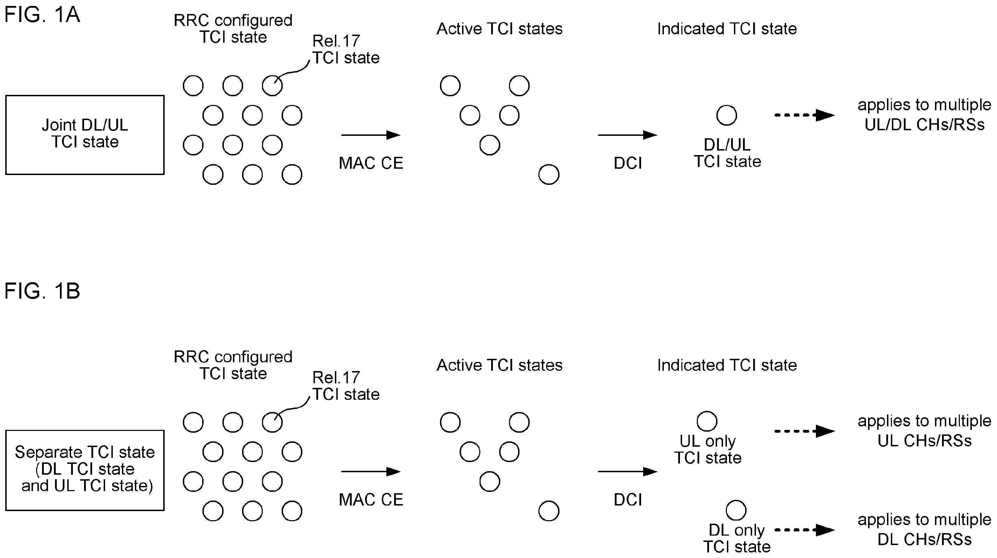

FIG. 1A and FIG. 1B show examples of a unified TCI framework. FIG. 1A shows an example of a joint DL/UL TCI state, while FIG. 1B shows an example of separate TCI states (for example, Separate TCIs (DL TCI state and UL TCI state).

In the example in FIG. 1A, an RRC parameter (information element) configures a plurality of TCI states for both DL and UL. In the present disclosure, TCI states configured by an RRC parameter may be referred to as configured TCI states or configuration TCI states (for example, configured TCI states). The MAC CE may activate a plurality of TCI states among the plurality of configured TCI states. DCI may indicate one of the plurality of activated TCI states. In the present disclosure, a TCI state indicated by DCI may be referred to as an indicated TCI state or an indication TCI state (for example, Indicated TCI state).

DCI may be UL DCI (for example, DCI used for scheduling of a PUSCH) or DL DCI (for example, DCI used for scheduling of a PDSCH). The indicated TCI state may be applied to at least one (or all) of UL/DL channels/RSs. A DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different DCIs may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

A method of configuring/indicating a TCI state (for example, joint DL/UL TCI state) in FIG. 1A and a method of configuring/indicating application of TCI states (for example, separate TCI states) in FIG. 1B may be switched for application. Which of a joint DL/UL TCI state and separate TCI states is applied may be configured for a UE by a base station by a higher layer parameter.

### {Physical Layer Procedure/Antenna Port QCL for Data}

To provide a reference signal for a PDSCH DMRS and a PDCCH DMRS and a CSI-RS in a given CC, and furthermore, to provide, if a UL TX (transmission) spatial filter for dynamic grant and configured grant-based PUSCH and PUCCH resources and an SRS in the given CC is available, a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies this indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC/DL BWP to which the TCI state is applied.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

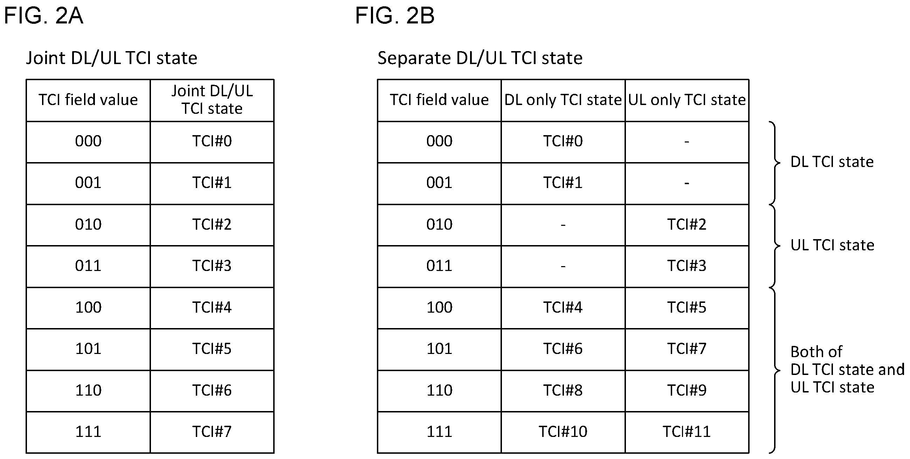

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCCH (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCCH (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state and a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE judges the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

### (Beam Application Time (BAT))

For DCI-based beam indication in Rel. 17, studies 1 and 2 below are under study in relation to application time for indication of a beam/unified TCI state (beam application time (BAT)).

### {Study 1}

It is studied that a first slot to which indicated TCI is applied is after at least Y symbols from a last symbol of an acknowledgement (ACK) for joint or separate DL/UL beam indication. It is studied that a first slot to which indicated TCI is applied is after at least Y symbols from a last symbol of an ACK/negative acknowledgement (NACK) for joint or separate DL/UL beam indication. The Y symbols may be configured by a base station, based on a UE capability reported by the UE. The UE capability may be reported in a symbol unit.

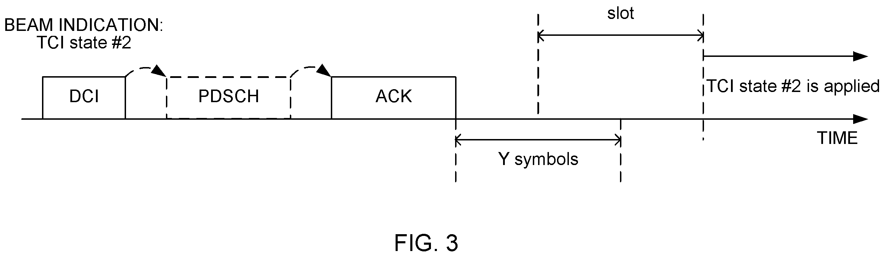

In an example in FIG. 3, the ACK may be an ACK for a PDSCH scheduled by beam indication DCI. In this example, the PDSCH may not be transmitted. The ACK in this case may be an ACK for the beam indication DCI.

For DCI-based beam indication in Rel. 17, it is studied that at least one Y symbol is configured for the UE for each BWP/CC.

When SCS varies between a plurality of CCs, a Y symbol value also varies, and thus there is a possibility that the application time varies between the plurality of CCs.

### {Study 2}

For a case of CA, an application timing/BAT of the beam indication may follow one of choices 1 to 3 below.
{Choice 1} Both of the first slot and Y symbols are determined on a carrier with the lowest SCS, from among one or more carriers to which the beam indication is applied.
{Choice 2} Both of the first slot and Y symbols are determined on a carrier with the lowest SCS, from among one or more carriers to which the beam indication is applied and a UL carrier that delivers the ACK.
{Choice 3} Both of the first slot and Y symbols are determined on a UL carrier that delivers the ACK.

It is studied that as a CC simultaneous beam update function of Rel. 17, a beam is common to a plurality of CCs in the CA. According to study 2, the application time is common to the plurality of CCs.

The application time (Y symbols) for the beam indication for the CA may be determined on a carrier with the lowest SCS, from among carriers to which the beam indication is applied. MAC CE-based beam indication in Rel. 17 (when only a single TCI codepoint is activated) may follow a Rel-16 application timeline for MAC CE activation.

Based on these studies, it is studied that the following operation is defined in a specification.

### {Operation}

When the UE transmits a last symbol of a PUCCH with HARQ-ACK information corresponding to DCI for communicating TCI state indication, application of an indicated TCI state with a Rel-17 TCI state may be started at a first slot after at least Y symbols from the last symbol of the PUCCH. Y may be a higher layer parameter (for example, BeamAppTime_r17 [symbol]). Both of the first slot and Y symbols may be determined on a carrier with the lowest SCS, from among carriers to which the beam indication is applied. At a given timing, the UE may assume one indicated TCI state with a Rel-17 TCI state for DL and UL, or may assume one indicated TCI state with a Rel-17 TCI state for UL (separately from DL).

In place of Y [symbol], X [ms] may be used.

For the application time, it is studied that the UE reports at least one of UE capabilities 1 and 2 below. {UE Capability 1}

Minimum application time for each SCS (minimum value of Y symbols between a last symbol of a PUCCH that delivers an ACK and a first slot to which a beam is applied).

### {UE Capability 2}

A minimum time gap between a last symbol of a beam indication PDCCH (DCI) and a first slot to which a beam is applied. A gap between the last symbol of the beam indication PDCCH (DCI) and the first slot to which the beam is applied may satisfy the UE capability (minimum time gap).

UE capability 2 may be an existing UE capability (for example, timeDurationForQCL).

A relationship between indication of a beam and a channel/RS to which the beam is applied may satisfy at least one of UE capabilities 1 and 2.

For the application time, it is conceivable that a parameter (for example, BeamAppTime_r17) configured by the base station is an optional field.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID (for example, a PCI) or a virtual cell ID.

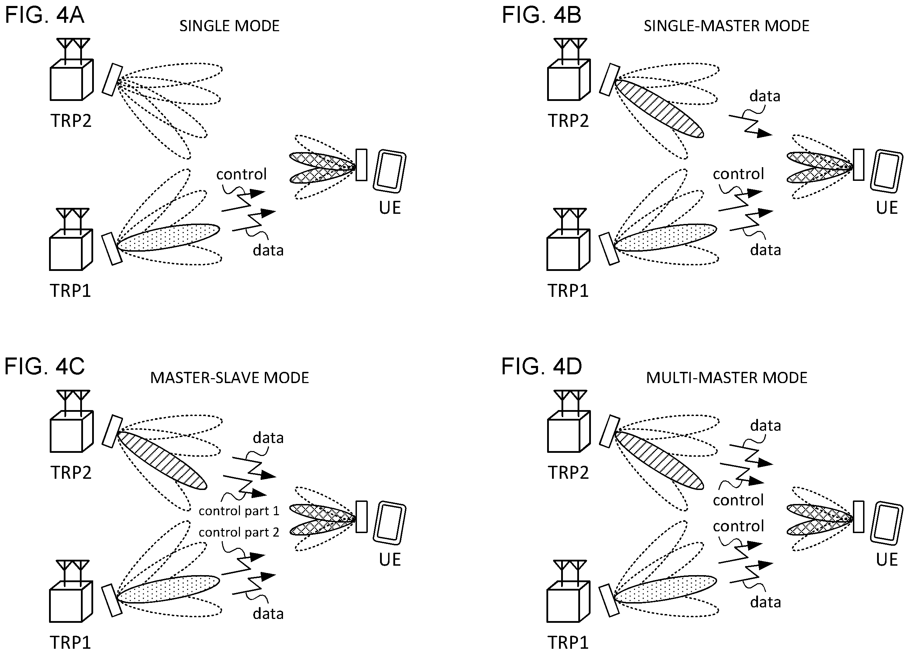

FIG. 4A to FIG. 4D are diagrams to show examples of multi-TRP scenarios. In these examples, it is assumed that each TRP can transmit four different beams, but this is not restrictive.

FIG. 4A shows an example of a case where only one TRP (TRP1 in this example) of the multi-TRP performs transmission to a UE (which may be referred to as a single mode, a single TRP, and the like). In this case, TRP1 transmits both a control signal (PDCCH) and a data signal (PDSCH) to the UE.

In the present disclosure, a single-TRP mode may mean a mode where no multi-TRP (mode) is configured.

FIG. 4B shows an example of a case where only one TRP (TRP1 in this example) of the multi-TRP transmits a control signal to a UE and where the multi-TRP transmits data signals (which may be referred to as a single-master mode). The UE receives respective PDSCHs transmitted from the multi-TRP, based on a downlink control information (DCI).

FIG. 4C shows an example of a case where the respective TRPs of the multi-TRP transmit parts of a control signal to a UE and where the multi-TRP transmits data signals (which may be referred to as a master-slave mode). TRP1 may transmit part 1 of the control signal (DCI), and TRP2 may transmit part 2 of the control signal (DCI). Part 2 of the control signal may depend on part 1. The UE receives respective PDSCHs transmitted from the multi-TRP, based on these parts of the DCI.

FIG. 4D shows an example of a case where the respective TRPs of the multi-TRP transmit different control signals to a UE and where the multi-TRP transmits data signals (which may be referred to as a multi-master mode). TRP1 may transmit a first control signal (DCI), and TRP2 may transmit a second control signal (DCI). The UE receives respective PDSCHs transmitted from the multi-TRP, based on these DCIs.

When a plurality of PDSCHs from multi-TRP (which may be referred to as multi-PDSCH (multiple PDSCHs)) are scheduled by using a DCI as in FIG. 4B, the DCI may be referred to as single DCI (S-DCI, single PDCCH). When a plurality of PDSCHs from multi-TRP are scheduled by using a plurality of DCIs as in FIG. 4D, the plurality of DCIs may be referred to as multi-DCI (M-DCI, multi-PDCCH (multiple PDCCHs)).

Each TRP of the multi-TRP may transmit a different transport block (TB)/codeword (Code Word (CW))/different layer. Alternatively, each TRP of the multi-TRP may transmit the same TB/CW/layer.

As one mode of multi-TRP transmission, non-coherent joint transmission (NCJT) is studied. In NCJT, for example, TRP1 performs modulation mapping on a first codeword, performs layer mapping, and transmits a first PDSCH in layers of a first number (for example, two layers) by using first precoding. TRP2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a given QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such multi-TRP scenarios, more flexible transmission control using a channel with high quality is possible.

NCJT using multi-TRP/panel has a possibility of using a high rank. To support ideal and non-ideal backhaul between a plurality of TRPs, both single DCI (single PDCCH, for example, FIG. 4B) and multi-DCI (multi-PDCCH, for example, FIG. 4D) may be supported. The maximum number of TRPs may be two for both single DCI and multi-DCI.

TCI enhancement is studied for single-PDCCH design (mainly for ideal backhaul). Each TCI codepoint in DCI may correspond to one or two TCI states. A TCI field size may be the same as that of Rel. 15.

For a PDCCH/CORESET defined in Rel. 15, one TCI state without any CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-DCI based multi-TRP.

### (Analysis)

In Rel. 18 or later versions, it is studied to introduce a case where multi-TRP is configured and where a unified TCI state is applied. Application of a unified TCI state to multi-TRP is not supported in Rel. 17 or earlier versions.

In multi-TRP operation of an existing specification (Rel. 16 or earlier versions), by DCI for scheduling a channel (for example, a PDSCH) (which may be referred to as scheduling DCI), the number of TCI states to be applied to the channel thus scheduled is controlled.

Specifically, a UE determines to use a single TRP when the number of TCI state indicated by the DCI is one, and determines to use multi-TRP when the number of TCI states indicated by the DCI is two. In this way, the UE switches switch of a single TRP and multi-TRP, based on the number of TCI states indicated by DCI.

Meanwhile, in a case of Rel. 18 or later versions where multi-TRP is configured and also where a unified TCI state is applied, it is studied to initiate application of a TCI state (for example, a unified TCI state) indicated by beam indication DCI after the elapse of BAT from transmission of an HARQ-ACK related to the DCI.

Hence, it is considered that, when switch between a single TRP and multi-TRP is performed based on the number of indicated TCI states, switch by scheduling DCI as those in an existing specification cannot be performed.

Specifically, X TCI states (indicated TCI states/unified TCI states) (X is an integer equal to or larger than 2 (for example, 2 or 4)) are indicated at maximum for a UE by RRC/MAC CE/DCI, one or a plurality of (for example, two) TCIs are subsequently selected/determined from the X TCI states by scheduling DCI.

In Rel. 18 or later versions for which such a case is conceivable, a UE cannot recognize how many TCI states are indicated until decoding of DCI is completed.

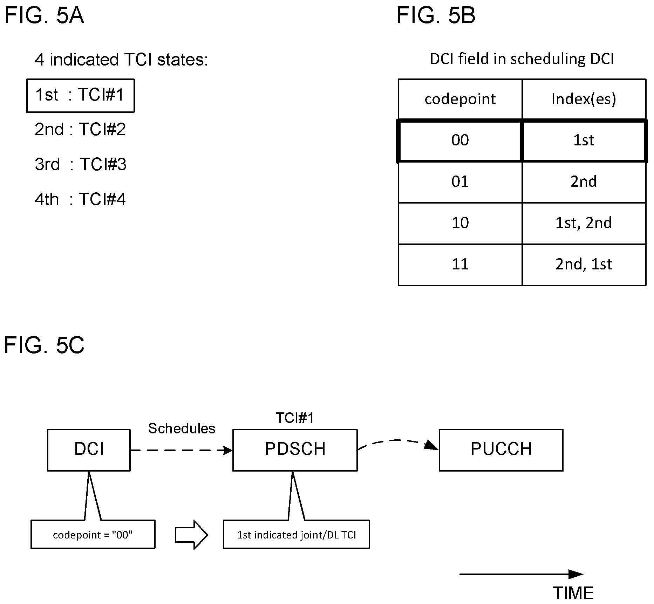

FIG. 5A to FIG. 5C are diagrams to show an example of application of an indicated TCI state(s). As in the example shown in FIG. 5A, four indicated TCI states (TCI #1 as a first TCI state, TCI #2 as a second TCI state, TCI #3 as a third TCI state, and TCI #4 as a fourth TCI state) are indicated to a UE by RRC/MAC CE/DCI.

As in the example shown in FIG. 5B, switch between a single TRP and multi-TRP is performed by a specific field (existing field (which may be a TCI field, for example)/new field) included in scheduling DCI (DCI format 1_1/1_2). In the example shown in FIG. 5B, "00" is shown as a codepoint of the field, to indicate application of the first TCI state (in other words, single-TRP operation is indicated).

FIG. 5C shows an example of reception of scheduling DCI and a scheduled PDSCH and transmission of a PUCCH corresponding to the PDSCH by a UE. The DCI indicates application of the first TCI state as shown in FIG. 5B. In this case, the UE determines to apply the first TCI state (indicated TCI state, joint/DL TCI state) to a PDSCH.

Application of a TCI state as that shown in FIG. 5A to FIG. 5C is possible when a PDSCH is received after completion of decoding of scheduling DCI. Otherwise (for example, when a scheduling offset is smaller than a specific threshold value), a UE cannot determine an indicated TCI state to apply to a channel/signal (in this case, a PDSCH).

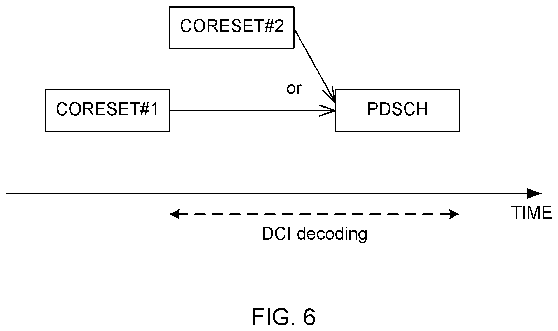

When a PDSCH is scheduled by DCI, a case where a plurality of CORESETs are allocated (or monitored) before the PDSCH is also assumed (see FIG. 6). FIG. 6 shows a case where a PDSCH is scheduled after allocation of first CORESET #1 and second CORESET #2. In this case, it is also assumed that a UE cannot judge which CORESET schedules a PDSCH or which TCI state is indicated by DCI, before completion of decoding of the DCI.

Study about a case where a UE cannot determine a TCI state to apply as described above is not sufficient. Unless this study is sufficient, a TCI state cannot be applied appropriately, degradation in communication quality, throughput reduction, and the like may occur.

Thus, the inventors of the present invention came up with the idea of a method for appropriately performing operation related to a unified TCI state(s).

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a reception panel, a UE panel, a UE capability value, a UE capability value set, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, an indicated TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of spatial relation information," and the like. The TCI state and the TCI may be interchangeably interpreted.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, transmission/reception of a channel/signal using a single TRP may be interpreted as TCI states (joint/separate/indicated TCI states) being equal in transmission/reception of the channel/signal (for example, NCJT/CJT/repetition) or the number of TCI states (joint/separate/indicated TCI states) being one in transmission/reception of the channel/signal (for example, NCJT/CJT/repetition).

Transmission/reception of a channel/signal using a single TRP may be interpreted as TCI states (joint/separate/indicated TCI states) being different in transmission/reception of the channel/signal (for example, NCJT/CJT/repetition) or the number of different TCI states (joint/separate/indicated TCI states) being more than one (for example, two) in transmission/reception of the channel/signal (for example, NCJT/CJT/repetition).

In the present disclosure, a single TRP, a single-TRP system, single-TRP transmission, and a single PDSCH may be interchangeably interpreted. In the present disclosure, multi-TRP (a plurality of TRPs), a multi-TRP system, multi-TRP transmission, and multi-PDSCH may be interchangeably interpreted.

In the present disclosure, single DCI, a single PDCCH, multi-TRP based on single DCI, two TCI states in at least one TCI codepoint being activated, at least one codepoint of a TCI field being mapped to two TCI states, a specific index (for example, a TRP index, a CORESET pool index, or an index corresponding to a TRP) being configured for a specific channel/CORESET may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted.

In the present disclosure, multi-TRP based on multi-DCI, one CORESET pool index (CORESETPoolIndex) value being configured for a CORESET, and a plurality of specific indices (for example, TRP indices, CORESET pool indices, or indices corresponding to TRPs) being configured for a specific channel/CORESET may be interchangeably interpreted.

In the present disclosure, TRP #1 (first TRP) may correspond to CORESET pool index = 0 or may correspond to the first TCI state of two TCI states corresponding to one codepoint of a TCI field. TRP #2 (second TRP) TRP #1 (first TRP) may correspond to CORESET pool index = 1 or may correspond to the second TCI state of two TCI states corresponding to one codepoint of a TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

In the present disclosure, beam indication DCI, a beam indication MAC CE, and beam indication DCI/MAC CE may be interchangeably interpreted. In other words, indication related to an indicated TCI state for a UE may be performed by using at least one of DCI and a MAC CE.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, applying a TCI state/QCL assumption to each channel/signal/resource may mean applying a TCI state/QCL assumption to transmission/reception of each channel/signal/resource.

In the present disclosure, a first TCI state (TCI state indicated first) may correspond to a first TRP. In the present disclosure, a second TCI state (TCI state indicated second) may correspond to a second TRP. In the present disclosure, an n-th TCI state (TCI state indicated n-th) may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

Note that, in each of the embodiments of the present disclosure below, description will be mainly given of a method targeting two TRPs for application of a plurality of TCI states in transmission/reception using a plurality of TRPs (in other words, a case where at least one of N and M is 2). However, the number of TRPs may be three or more (more than one), and each embodiment may be applied in accordance with the number of TRPs. In other words, at least one of N and M may be a number larger than 2.

### (Radio Communication Method)

### <First Embodiment>

A first embodiment will describe an example of application of a unified TCI state in single-DCI based multi-TRP.

For enhancement of a unified TCI framework for single-DCI based multi-TRP, the following operations may be supported for PDSCH reception.

### {Operation #1}

When only one indicated joint/DL TCI state is present in a CC/BWP, a UE may apply the one indicated joint/DL TCI state for PDSCH reception in the CC/BWP.

### {Operation #2}

When two indicated joint/DL TCI states are present in a CC/BWP, a DCI field included in DCI (for example, DCI format 1_1/1_2) may be used for notification that a UE applies the first joint/DL TCI state, the second joint/DL TCI state, or both of the joint/DL TCI states to PDSCH reception in the CC/BWP. Presence of the DCI field (or presence or absence of the DCI field), may be configurable by RRC. When no DCI field is present in DCI format 1_1/1_2, the UE may apply both of the joint/DL TCI states to PDSCH reception in the CC/BWP.

In the present disclosure, "when two indicated joint/DL TCI states are present" may be a case where two indicated joint/DL TCI states are in an applicable state. For example, it may be a case where two indicated joint/DL TCI states are supported/configured/applied in a CC/BWP, a case where two indicated joint/DL TCI states being supportable/configurable/applicable is configured by an RRC parameter, or a case where two indicated joint/DL TCI states are activated (for example, two TCI states are mapped to one codepoint of a given field in DCI).

When one indicated joint/DL TCI state is present in one BWP/CC in operation #1, the indicated joint/DL TCI state may always be applied. In this case, the indicated joint/DL TCI state may be applied irrespective of whether or not an RRC parameter indicating following a unified TCI state (for example, followUnifiedTCI) is configured. Alternatively, the indicated joint/DL TCI state may be applied irrespective of whether or not a scheduling offset (offset between DCI and a PDSCH) is smaller than a given threshold (for example, timeDurationForQCL). Alternatively, the indicated joint/DL TCI state may be applied irrespective of a CORESET to be used for scheduling (for example, a scheduling CORESET). Alternatively, the indicated joint/DL TCI state may be applied irrespective of whether or not a scheduling DCI format/TCI state field is present.

Alternatively, a condition for application of operation #1 may be limited/restricted. For example, for PDSCH reception by a UE in a CC/BWP, operation to which only one indicated joint/DL TCI state is applied may be applied only in a specific case. The specific case may be, for example a case where an indicated joint/DL TCI state is associated with the PCI of a serving cell (operation #A). When an indicated joint/DL TCI state is associated with the PCI of a non-serving cell and a scheduling offset is smaller than (<) a given threshold (for example, timeDurationForQCL), a default QCL rule of an existing system (for example, Rel. 15) may be applied.

Alternatively, for PDSCH reception by a UE in a CC/BWP, operation to which only one indicated joint/DL TCI state is applied may be applied to a case where an indicated joint/DL TCI state is associated with the PCI of a serving cell or the PCI of an additional cell (operation #B).

Alternatively, in a case where a given RRC parameter for configuring a plurality of (or more than one) joint/DL TCI states for single-DCI based multi-TRP (for example, more than one joint/DL TCI states for sDCI mTRP) is configured/indicated, operation #B may be applied when one indicated joint/DL TCI state is present in one BWP/CC.

In this case, in Rel. 18 or later versions, when one indicated joint/Dl TCI state is present in one BWP/CC, operation different from operation of Rel. 17 may be applied. This may mean switching between Rel-17 TCI operation and Rel-18 TCI operation by a given RRC parameter.

In a case where the given RRC parameter (for example, more than one joint/DL TCI state for sDCI mTRP) is configured/indicated, a UE need not assume that an indicated joint/DL TCI state is associated with a PCI other than the PCI of the serving cell. In other words, it may be configured that Rel-17 L1/L2 inter-cell mobility and Rel-18 single-DCI based multi-TRP are not simultaneously applied/supported.

In a case where the given RRC parameter (for example, more than one joint/DL TCI states for sDCI mTRP) is configured/indicated, when one indicated joint/DL TCI state is present in one BWP/CC, the indicated joint/DL TCI state may be associated with a PCI other than the PCI of the serving cell.

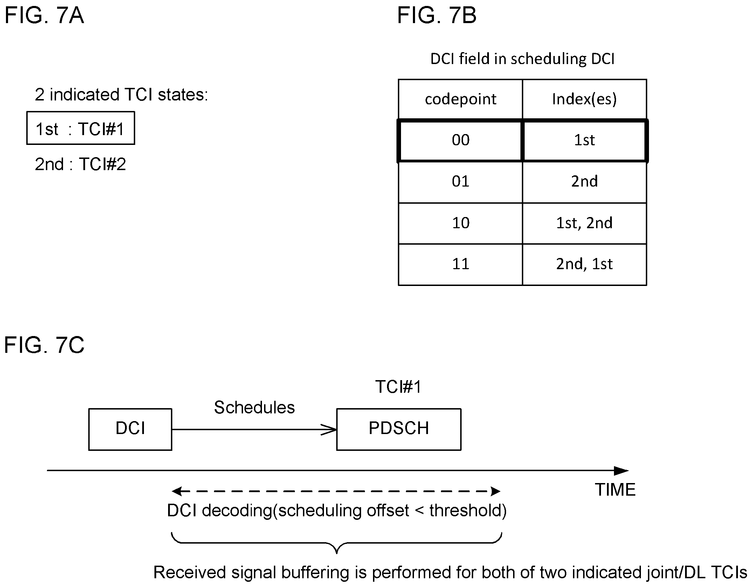

When a plurality of (for example, two or more) indicated joint/DL TCI states are present in one CC/BWP in operation #2, the UE may perform received signal buffering in all the indicated joint/DL TCI states (see FIGS. 7A to 7C).

FIG. 7A to FIG. 7C are diagrams to show an example of application of indicated TCI states. As in the example shown in FIG. 7A, two indicated TCI states (TCI #1 as a first TCI state and TCI #2 as a second TCI state) are indicated to a UE by RRC/MAC CE/DCI. Note that the number of indicated TCI states is not limited to two and may be another value (for example, four).

As in the example shown in FIG. 7B, one or two TCI states are indicated (or switch between a single TRP and multi-TRP is performed) by a specific field (existing field (which may be a TCI field, for example)/new field) included in scheduling DCI (DCI format 1_1/1_2). In the example shown in FIG. 7B, "00" is shown as a codepoint of the field, to indicate application of the first TCI state (in other words, single-TRP operation is indicated).

FIG. 7C shows an example of reception of scheduling DCI and a scheduled PDSCH and transmission of a PUCCH corresponding to the PDSCH by the UE. The DCI indicates application of the first TCI state as shown in FIG. 7B.

The UE may perform, after completion of DCI decoding (for example, DCI decoding) after buffering, reception processing (for example, reception/demodulation/decoding) of a PDSCH in a joint/DL TCI state (here, TCI state #1) indicated by DCI. In the present disclosure, buffering may be interpreted as first reception processing, and reception processing (for example, reception processing subsequent to DCI decoding) may be interpreted as second reception processing.

FIG. 7C shows a case where a PDSCH is scheduled by DCI and a scheduling offset is smaller than (<) a given threshold (for example, timeDurationForQCL). This corresponds to a case where two indicated joint/DL TCI states (for example, TCI state #1 and TCI state #2) are configured/activated/supported and the first (1st) TCI state (here, TCI state #1) is indicated by a TCI state field in the DCI.

In this case, the UE may perform the first reception processing (for example, buffering) on a received signal, based on the two joint/DL TCI states (for example, TCI state #1 and TCI state #2), and thereafter, after completion of the DCI decoding (for example, DCI decoding), perform the second reception processing on a received signal, based on the joint/DL TCI state (here, TCI state #1) indicated by the DCI.

In this case, the UE performs received signal buffering in the two joint/DL TCI states (for example, TCI state #1 and TCI state #2) in a period where the scheduling offset is smaller than (<) the given threshold (for example, timeDurationForQCL) in advance, and hence the UE can determine in which joint/DL TCI state a PDSCH is received after completion of the DCI decoding. With this, when a plurality of joint/DL TCI states are configured/activated/supported and the scheduling offset is smaller than (<) the given threshold, the UE can receive a PDSCH without applying a specific rule.

Such operation (reception operation of a PDSCH using an indicated joint/DL TCI state after received signal buffering operation using a plurality of indicated joint/DL TCI states/DCI decoding) may be applied irrespective of whether or not an RRC parameter indicating following a unified TCI state (for example, followUnifiedTCI) is configured. Alternatively, such operation may be applied irrespective of whether or not a scheduling offset (offset between DCI and a PDSCH) is smaller than (<) the given threshold (for example, timeDurationForQCL). Alternatively, such operation may be applied irrespective of a CORESET to be used for scheduling (for example, a scheduling CORESET). Alternatively, such operation may be applied irrespective of whether or not a scheduling DCI format/TCI state field is present.

### <<Variations>>

In operation #1/operation #2 described above, when one indicated joint/DL TCI state is configured/supported in a CC/BWP, operation of an existing system (for example, Rel. 17) may be applied (for example, fallback to Rel-17 operation may be performed).

This may mean switching between a Rel-17 unified TCI state for a single TRP and a Rel-18 unified TCI state for single-DCI based multi-TRP by using the number of "indicated joint/DL TCI states in a CC/BWP" indicated by RRC/MAC CE/DCI. It may be configured that a Rel-17 unified TCI state for a single TRP supports L1/L2 inter-cell mobility while a Rel-18 unified TCI state does not support L1/L2 inter-cell mobility.

Alternatively, a Rel-17 unified TCI state for a single TRP and a Rel-18 unified TCI state for single-DCI based multi-TRP (or Rel-18 single-DCI based multi-TRP operation) may be switched by using an RRC parameter. For example, Rel-18 single-DCI based multi-TRP may be applied when a given RRC parameter is configured, and Rel-17 operation may be applied otherwise.

One indicated joint/DL TCI state in a CC/BWP may be indicated by RRC/MAC CE or a TCI state field in DCI. The DCI (for example, DCI format 1_1/1_2) may be DCI with DL assignment or may be DCI without DL assignment. In addition to the DCI, one indicated joint/DL TCI state in the CC/BWP may be indicated by an existing/new field in scheduling DCI (for example, DCI format 1_0/1_1/1_2). For example, the new field in the DCI may be a plurality of fields (for example, a first index field and a second index field) to be used for indication of respective TCI states for a PDSCH and a PUCCH.

Note that, when the number of indicated TCI states indicated by beam indication DCI is two, a UE may be changed with operation whether to perform buffering on a received signal, based on a plurality of TCIs, depending on whether or not switch of operation/specification of operation is performed by a field in scheduling DCI.

In a case where the presence of a DCI field (or presence or absence of a DCI field) to be used for indication of a TCI state(s) is configurable by RRC, when no DCI field (for example, a field indicating the 1st, the 2nd, or both of two joint/DL TCI states) is present in DCI format 1_1/1_2, the joint/DL TCI state(s) indicated for PDSCH reception in a CC/BWP may be applied, or the TCI state of a PDSCH/A-CSI-RS may be determined based on a given rule. For example, when two joint/DL TCI states are indicated, this may mean both or one of the 1st and 2nd. The given rule may be defined in a specification or may be configured by an RRC parameter.

Alternatively, when an offset between reception of DCI format 1_1/1_2 and reception of a corresponding PDSCH is smaller than a threshold (for example, timeDurationForQCL), the joint/DL TCI state indicated for PDSCH reception in a CC/BWP may be applied irrespective of whether or not a DCI field is present.

In a case where one indicated joint/DL TCI state is indicated, when a DCI field used for indication of a TCI state(s) (for example, a field for indicating the 1st, the 2nd, and both of two joint/DL TCI states) is present, the UE may ignore the DCI field. Alternatively, the DCI field may be applied for another usage. Examples of the other usage may include indication of a joint/DL TCI state(s) and indication of a UL TCI state(s). In this case, the DCI field may be used in addition to an existing TCI state field to indicate an indicated joint/DL/UL TCI state(s).

### {Switch of Buffering Operations}

Alternatively, whether to perform received signal buffering by assuming a plurality of (for example, two) joint/DL TCI states (buffering operation #1) or perform received signal buffering by assuming one joint DL/TCI state (buffering operation #2) may be switched for application. Buffering operation may be interpreted as reception operation.

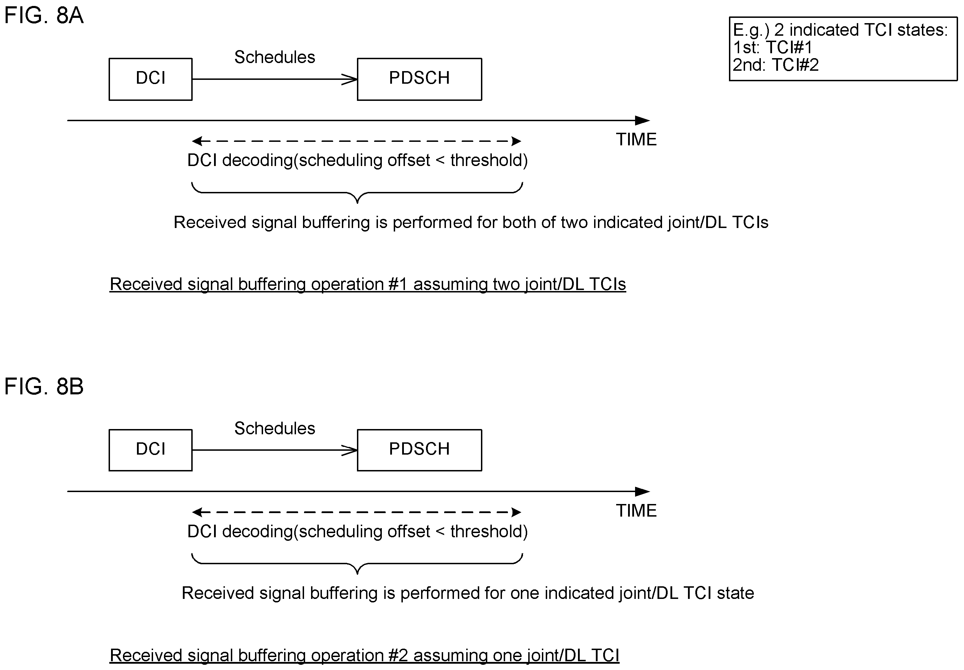

In a case of applying buffering operation #1, the UE may perform buffering received signal processing by assuming two joint/DL TCI states. In a case of applying buffering operation #2, the UE may perform received signal buffering processing by assuming one joint DL/TCI state (see FIGS. 8A and 8B).

In the case of applying buffering operation #2, a method of selecting one joint/DL TCI state to use may be determined based on a given rule. Alternatively, information of a given TCI state to be used for buffering may be configured/notified by an RRC parameter. For example, which TCI state in the order of two joint/DL TCI states may be notified, or a TCI state ID may be notified.

Whether to apply buffering operation #1 (for example, FIG. 8A) or buffering operation #2 (for example, FIG. 8B) may be determined/selected based on at least one of switch rule #1-1 to switch rule #1-4 below.

### <<Switch Rule #1-1>>

One of buffering operation #1 and buffering operation #2 may be configured/activated/indicated by higher layer signaling/MAC CE/DCI.

### <<Switch Rule #1-2>>

Whether to apply buffering operation #1 or buffering operation #2 may be determined based on an indicated joint/DL TCI state(s) configured/supported (for example, the number of indicated joint/DL TCI states).

### <<Switch Rule #1-3>>

Whether to apply buffering operation #1 or buffering operation #2 may be broadcast by UE capability.

### <<Switch Rule #1-4>>

Whether to apply buffering operation #1 or buffering operation #2 may be determined based on the frequency domain/time domain for reception. For example, whether to apply buffering operation #1 or buffering operation #2 may be determined based on whether reception is in a given CC/BWP/slot/symbol or reception is in a CC/BWP/slot/symbol other than the given CC/BWP/slot/symbol.

As described above, by supporting switch between buffering operation #1 of applying two indicated joint/DL TCI states and buffering operation #2 of applying one indicated joint/DL TCI state, a UE does not need to always perform received signal buffering by assuming two joint/DL TCI states. This can prevent strain on a memory and an increase in power consumption in the UE.

### {A-CSI-RS}

Note that, although the above description has been given by taking a PDSCH as an example, an applicable channel/signal is not limited to a PDSCH. For example, application may be made to an aperiodic CSI-RS (for example, an A-CSI-RS). In this case, the first embodiment may be applied by interpreting a PDSCH as an A-CSI-RS. In this case, instead of a given threshold (for example, timeDurationForQCL), beam switch timing (for example, beamSwitchTiming) may be used.

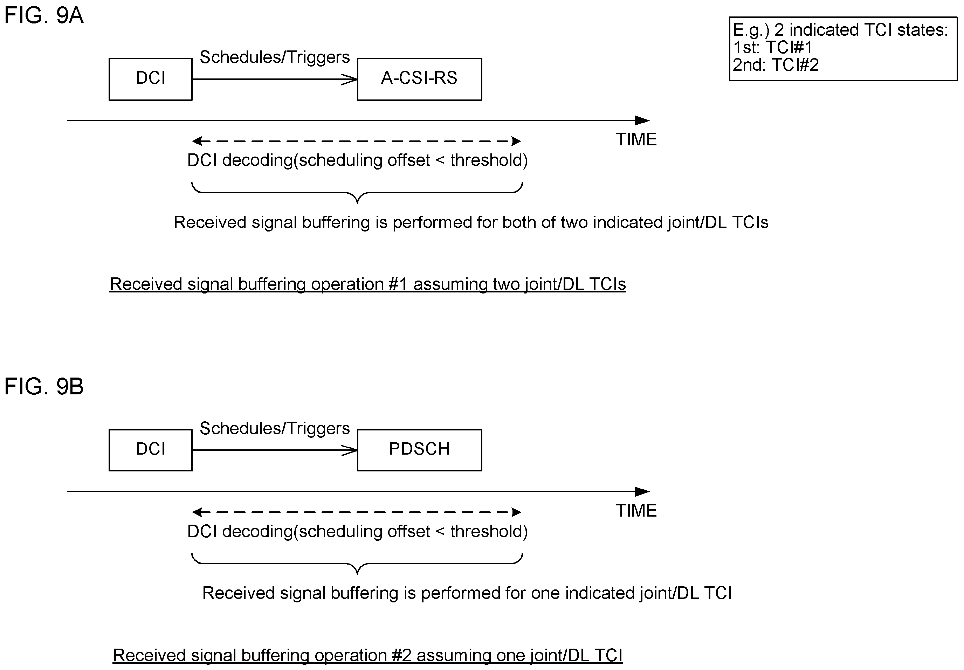

For an A-CSI-RS, switch between buffering operation #1 (or reception operation #1) and buffering operation #2 (or reception operation #2) may be applied/supported (see FIGS. 9A and 9B).

Note that only one TCI state may be applied for an A-CSI-RS. In this case, even when two TCI states are indicated, one TCI state may be used for reception of an A-CSI-RS.

When one indicated joint/DL TCI state is present in one BWP/CC, a UE may perform reception of an A-CSI-RS by using the indicated joint/DL TCI state. Such operation may be applied when no other DL signal is present in the same symbol. In a case where another DL signal is present in the same symbol, when the other DL signal corresponds to one TCI state, the TCI state is applied, and when the other DL signal corresponds to two TCI states, one of the two (for example, the first TCI state (1st TCI state)) may be applied.

When two indicated joint/DL TCI states are present in one BWP/CC, the UE may perform reception of an A-CSI-RS by using one of the two (for example, the 1st indicated joint/DL TCI state). Which indicated jon value/DL TCI state is applied/selected may be configured by an RRC parameter.

### {Variations}

For Rel-17 unified TCI, in a case where a scheduling offset is smaller than (<) a given threshold (for example, timeDurationForQCL), if an indicated joint/DL TCI state corresponds to a serving cell PCI, the indicated joint/DL TCI state is applied, and a Rel-15 default QCL rule is applied otherwise.

For a PDSCH/A-CSI-RS, when two or more joint/DL TCI states are indicated per BWP/CC and a scheduling offset is smaller than (<) the given threshold (for example, timeDurationForQCL), at least one of operation #1A and operation #2A may be applied.

### <<Operation #1A>>

Indicated joint/DL TCI states may be applied. For example, the indicated joint/DL TCI states may be applied irrespective of a serving cell PCI.

### <<Operation #2A>>

When indicated joint/DL TCI states correspond to a serving cell PCI, the indicated joint/DL TCI states are applied. Otherwise, Rel-16 default QCL for single-DCI based multi-TRP may be applied. The Rel-16 default QCL for single-DCI based multi-TRP may be TCI/QCL of the lowest TCI codepoint of TCI codepoints (for example, TCI state field codepoints) each having two active TCI states for TCI/QCL of a PDSCH.

Operation #1/operation #2 may be applied irrespective of whether or not an RRC parameter indicating following a unified TCI state (for example, followUnifiedTCI) is configured. Alternatively, operation #1/operation #2 may be applied irrespective of a CORESET to be used for scheduling (for example, a scheduling CORESET). Alternatively, operation #1/operation #2 may be applied irrespective of whether or not a scheduling DCI format/TCI state field is present.

### <Second Embodiment>

A second embodiment will describe an example of application of a unified TCI state(s) in multi-DCI based multi-TRP.

When a unified TCI state is supported in multi-DCI based multi-TRP, one joint/DL TCI state may be indicated for each CORESET pool index. In this case, a UE may apply at least one of option 2-1 to option 2-4 below.

### {Option 2-1}

By using two indicated joint/DL TCI states corresponding to respective CORESET pool indices (for example, #0 and #1), received signal buffering (or reception processing) may be performed.

For example, for a PDSCH scheduled by first DCI #0 (or PDCCH #1) corresponding to first CORESET pool index #0 or second DCI #2 (or PDCCH #2) corresponding to second CORESET pool index #1, the UE may perform buffering of the PDSCH by using both an indicated joint/DL TCI state corresponding to first CORESET pool index #0 and an indicated joint/DL TCI state corresponding to second CORESET pool index #1.

The UE may perform received signal buffering in two joint/DL TCI states and thereafter, after completion of DCI decoding (for example, DCI docoding), perform reception processing of a PDSCH in an indicated joint/DL TCI state related to a CORESET pool index corresponding to DCI (or a PDCCH).

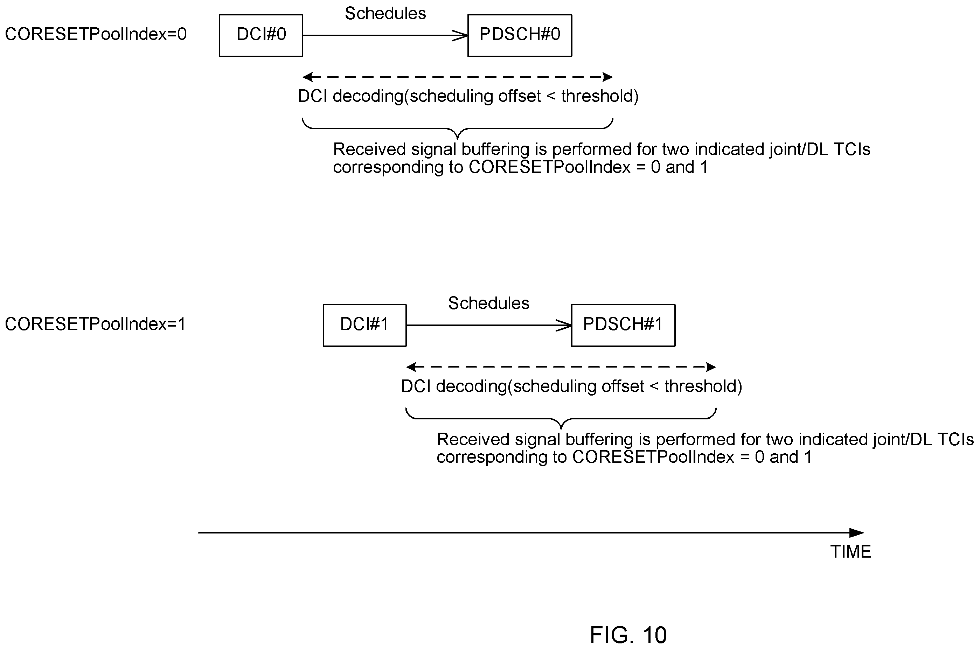

For example, after decoding the DCI, the UE may apply an indicated joint/DL TCI state corresponding to first CORESET pool index #0, to PDSCH #0 scheduled by first DCI #0 corresponding to first CORESET pool index #0. In contrast, in buffering of the PDSCH before DCI decoding, the UE may use, for PDSCH #0, both of the indicated joint/DL TCI state corresponding to first CORESET pool index #0 and the indicated joint/DL TCI state corresponding to second CORESET pool index #1 (see FIG. 10).

After decoding the DCI, the UE may apply the indicated joint/DL TCI state corresponding to second CORESET pool index #1, to PDSCH #1 scheduled by first DCI #1 corresponding to second CORESET pool index #1. In contrast, in the buffering of the PDSCH before the DCI decoding, the UE may use, for PDSCH #1, both the indicated joint/DL TCI state corresponding to first CORESET pool index #0 and the indicated joint/DL TCI state corresponding to second CORESET pool index #1 (see FIG. 10).

### {Option 2-2}

By using an indicated joint/DL TCI state corresponding to any one (or one) CORESET pool index of a plurality of (for example, two) CORESET pool indices (for example, #0 and #1), received signal buffering (or reception processing) may be performed.

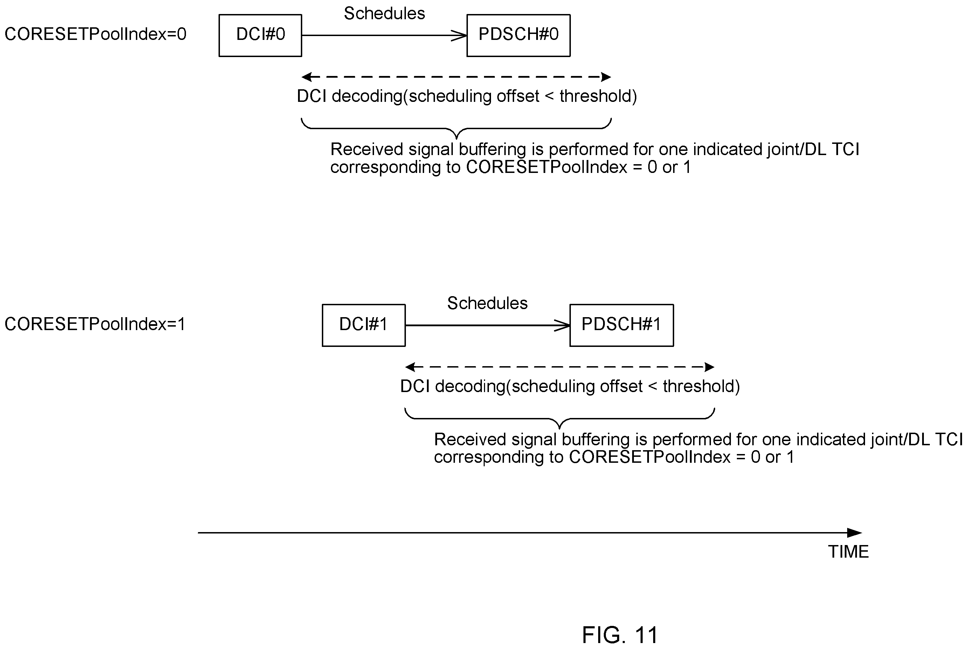

For example, after decoding DCI, the UE may apply an indicated joint/DL TCI state corresponding to first CORESET pool index #0, to PDSCH #0 scheduled by first DCI #0 corresponding to first CORESET pool index #0. In contrast, in buffering of a PDSCH before DCI decoding, the UE may use, for PDSCH #0, one indicated joint/DL TCI state corresponding to first CORESET pool index #0 or #1 (see FIG. 11).

Selection of a joint/DL TCI state to be used for buffering may be determined based on a given rule. For example, the UE may select/determine the one joint/DL TCI state, based on a specific codepoint of a specific field. The specific field may be a field to be used for switch between a single TRP and multi-TRP, may be an existing field (for example, a TCI field), or may be a new field defined in Rel. 18 or later versions. The specific codepoint may be the lowest (or highest) TCI codepoint, for example.

Selection of a joint/DL TCI state to be used for buffering may be configured by an RRC parameter. For example, information related to a given TCI state to be applied to buffering may be configured by an RRC parameter. As an example, which indicated joint/DL TCI state in the order of two joint/DL TCI states may be configured, or a TCI state ID may be configured. In a case of applying multi-DCI base, indication/selection may be performed in a given method or a higher layer by using CORESET pool index (= {0, 1}) instead of {1st TCI, 2nd TCI}.

Alternatively, when the UE can know a CORESET (or a CORESET pool index) corresponding to DCI at the time of buffering (or before decoding of the DCI), the UE may use one indicated joint/DL TCI state corresponding and related to the CORESET pool index of the CORESET in which DCI for scheduling each PDSCH is transmitted, to perform buffering/reception processing of the PDSCH.

### {Option 2-3}

Operation in option 2-1 (for example, buffering operation #1) and operation in option 2-2 (buffering operation #2) may be switched for application. The UE may control the switching, based on at least one of switch rule #2-1 to switch rule #2-4 below.

### <<Switch Rule #2-1>>

One of the operation in option 2-1 (for example, buffering operation #1) and the operation in option 2-2 (buffering operation #2) may be configured/activated/indicated by higher layer signaling/MAC CE/DCI.

### <<Switch Rule #2-2>>

Whether to apply the operation in option 2-1 (for example, buffering operation #1) or the operation in option 2-2 (buffering operation #2) may be determined based on an indicated joint/DL TCI state(s) configured/supported (for example, the number of indicated joint/DL TCI states).

### <<Switch Rule #2-3>>

Whether to apply the operation in option 2-1 (for example, buffering operation #1) or the operation in option 2-2 (buffering operation #2) may be broadcast by UE capability.

### <<Switch Rule #2-4>>

Whether to apply the operation in option 2-1 (buffering operation #1) or the operation in option 2-2 (buffering operation #2) may be determined based on the frequency domain/time domain for reception. For example, whether to apply the operation in option 2-1 (buffering operation #1) or the operation in option 2-2 (buffering operation #2) may be determined based on whether reception is in a given CC/BWP/slot/symbol or reception is in a CC/BWP/slot/symbol other than the given CC/BWP/slot/symbol.

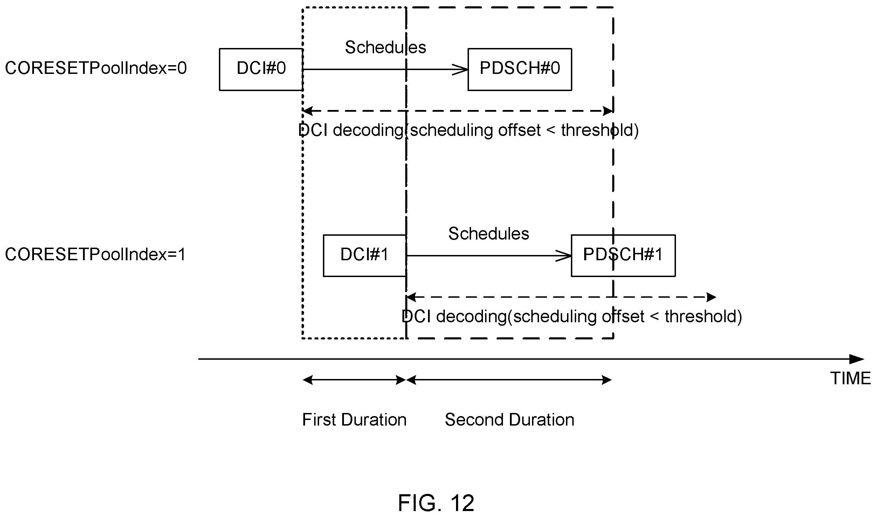

For example, a case is assumed where first PDSCH #0 is scheduled by first DCI #0 corresponding to first CORESET pool index #0 and second PDSCH #1 is scheduled by second DCI #1 corresponding to second CORESET pool index #1 (see FIG. 12). Here, shown is a case where second DCI #1 is transmitted after first DCI #0 is transmitted and second DCI #1 is transmitted before first PDSCH #0.

For example, the UE may perform, while receiving second DCI #1, received signal buffering in QCL (for example, the indicated joint/DL TCI state corresponding to first CORESET pool index #0) different from that of second DCI #1, in a first period (for example, after transmission of first DCI #0 to transmission of second DCI #1). In contrast, in a given period (for example, a second period) after the reception of second DCI #1, the UE may perform received signal buffering by using two joint/DL TCI states.

As described above, by supporting switch between buffering operation #1 of applying two indicated joint/DL TCI states and buffering operation #2 of applying one indicated joint/DL TCI state, a UE does not need to always perform received signal buffering by assuming two joint/DL TCI states. This can prevent strain on a memory and an increase in power consumption in the UE.

Option 2-1/2-2/2-3 may be applied irrespective of whether or not an RRC parameter indicating following a unified TCI state (for example, followUnifiedTCI) is configured. Alternatively, option 2-1/2-2/2-3 may be applied irrespective of whether or not a scheduling offset (offset between DCI and a PDSCH) is smaller than (<) the given threshold (for example, timeDurationForQCL). Alternatively, option 2-1/2-2/2-3 may be applied irrespective of a CORESET to be used for scheduling (for example, a scheduling CORESET). Alternatively, option 2-1/2-2/2-3 may be applied irrespective of whether or not a scheduling DCI format/TCI state field is present.

### {A-CSI-RS}

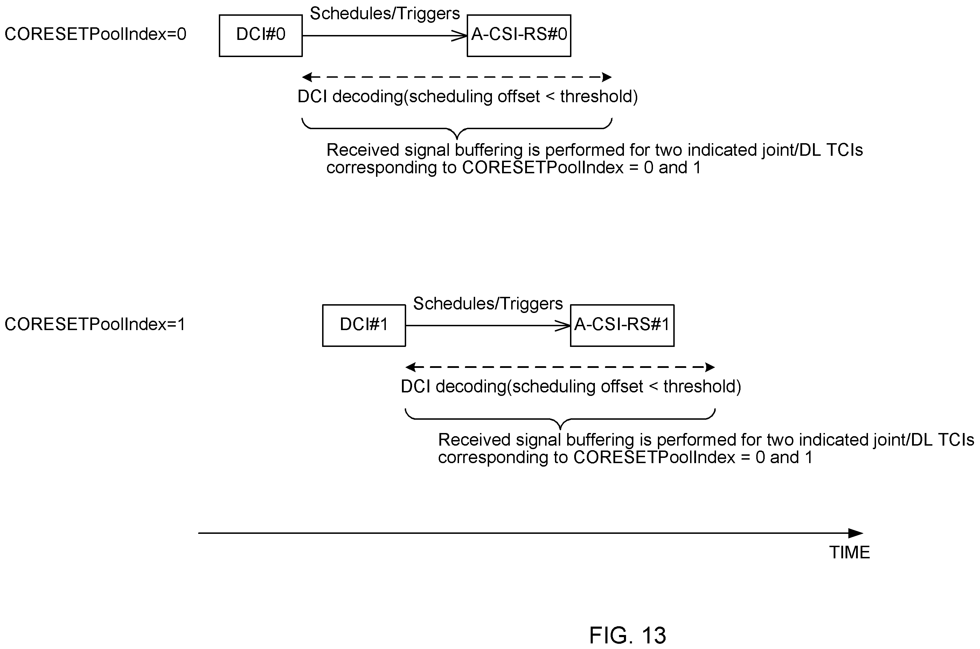

Note that, although the above description has been given by taking a PDSCH as an example, an applicable channel/signal is not limited to a PDSCH. For example, application may be made to an aperiodic CSI-RS (for example, an A-CSI-RS). In this case, the second embodiment may be applied by interpreting a PDSCH as an A-CSI-RS (see FIG. 13). In this case, instead of a given threshold (for example, timeDurationForQCL), beam switch timing (for example, beamSwitchTiming) may be used. FIG. 13 shows an example of a case where option 2-1 is applied to an A-CSI-RS. It is apparent that option 2-2/2-3 is applied to an A-CSI-RS.

### {Option 2-4}

In a case where one joint/DL TCI state is indicated for each CORESET pool index, if one/both of indicated joint/DL TCI states correspond to a cell (or PCI) other than a serving cell (or serving cell PCI), at least one of option 2-1 to option 2-3 described above (also including a case where a PDSCH is interpreted as an A-CSI-RS) may be applied.

In this case, one joint/DL TCI state corresponding to at least one of the CORESET pool indices may correspond to the serving cell PCI. This is because use of a TRP/TCI state corresponding to one of CORESET pool index serving cell PCIs is assumed in Rel-17 multi-TRP inter-cell (for example, Rel. 17 M-TRP inter cell), and reception of system information/short message in the TCI state is assumed.

Option 2-4 may be applied irrespective of whether or not an RRC parameter indicating following a unified TCI state (for example, followUnifiedTCI) is configured. Alternatively, option 2-4 may be applied irrespective of whether or not a scheduling offset (offset between DCI and a PDSCH) is smaller than (<) the given threshold (for example, timeDurationForQCL). Alternatively, option 2-4 may be applied irrespective of a CORESET to be used for scheduling (for example, a scheduling CORESET). Alternatively, option 2-4 may be applied irrespective of whether or not a scheduling DCI format/TCI state field is present.

### {Variations}

For Rel-17 unified TCI, in a case where a scheduling offset is smaller than (<) a given threshold (for example, timeDurationForQCL), if an indicated joint/DL TCI state corresponds to a serving cell PCI, the indicated joint/DL TCI state is applied, and a Rel-15 default QCL rule is applied otherwise.

When two or more joint/DL TCI states are indicated per BWP/CC for a PDSCH/A-CSI-RS and a scheduling offset is smaller than (<) a given threshold (for example, timeDurationForQCL), at least one of operation #1B and operation #2B may be applied.

### <<Operation #1B>>

Indicated joint/DL TCI states may be applied. For example, the indicated joint/DL TCI states may be applied irrespective of a serving cell PCI.

### <<Operation #2B>>

When indicated joint/DL TCI states correspond to a serving cell PCI, the indicated joint/DL TCI states are applied. Otherwise, Rel-16 default QCL for multi-DCI based multi-TRP may be applied. Rel-16 default QCL for multi-DCI based multi-TRP may be TCI/QCL corresponding to the lowest CORESET ID in the newest monitoring slot for each CORESET pool index.

Operation #1/operation #2 may be applied irrespective of whether or not an RRC parameter indicating following a unified TCI state (for example, followUnifiedTCI) is configured. Alternatively, operation #1/operation #2 may be applied irrespective of a CORESET to be used for scheduling (for example, a scheduling CORESET). Alternatively, operation #1/operation #2 may be applied irrespective of whether or not a scheduling DCI format/TCI state field is present.

### <Third Embodiment>

A third embodiment will describe an example of PDCCH receptions (or PDCCH repetitions) having different QCLs (for example, types of QCL-D).

For single-DCI/multi-DCI base for multi-TRP, when a PDSCH/A-CSI-RS with a given threshold from corresponding DCI is received by using a plurality of joint/DL TCI states, a UE has a capability of buffering received signals in a plurality of TCIs/QCLs simultaneously. The capability (for example, buffering operation) may also be enhanced to PDCCH receptions having different QCLs (for example, types of QCL-D).

For example, the UE may support reception of the same/different CORESETs in the same time domain (for example, the same symbol) by assuming a plurality of TCI states/QCLs. For example, the UE may apply at least one of option 3-1 and option 3-2 below.

### {Option 3-1}

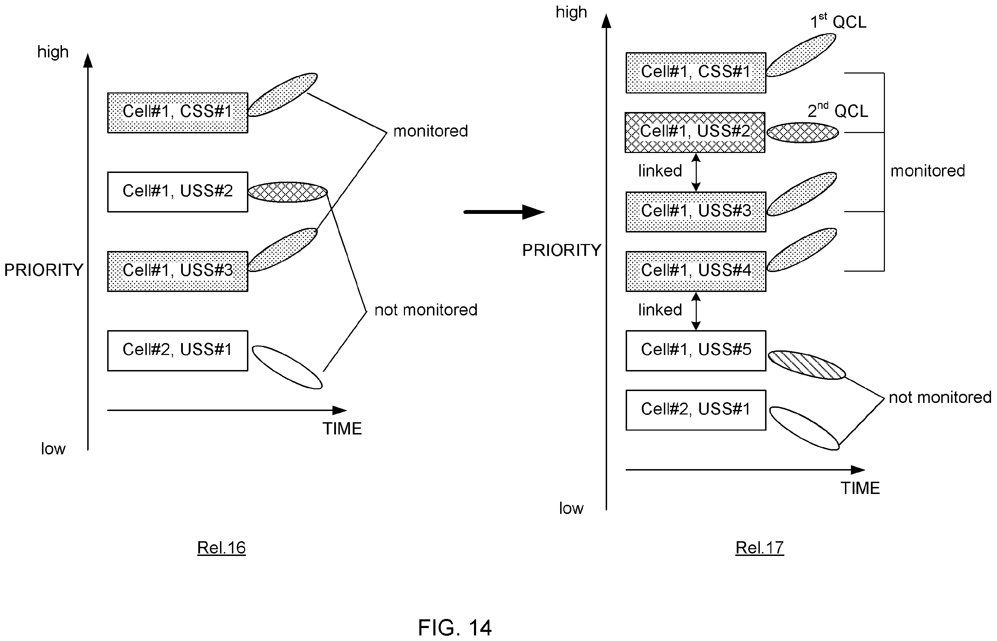

When PDCCH repetition of an existing system (for example, Rel. 17) (for example, Rel. 17 PDCCH repetition) is configured, PDCCH receptions may be controlled based on two respective QCL rules (for example, 1st QCL/2nd QCL) (see FIG. 14). The PDCCH repetition may be supported by PDCCH search space linking (for example, PDCCH SS linking).

1st QCL type D may be specified based on a Rel-16 rule. In Rel. 16, one QCL type D with the highest priority may be specified. A priority order may be, for example, CSS > USS, CC with a lower index (for example, a lower CC index) > CC with a higher index (for example, a higher CC index), and a search space set with a lower index (for example, lower SS set index) > search space set with a higher index (for example, a higher SS set index).

2nd QCL type D may be specified from search space sets linking with a search space set having the 1st QCL type D. Determination may be made from a plurality of search space sets being candidates for the 2nd QCL type D in accordance with a Rel-16 priority rule.

FIG. 14 shows a case where 1st QCL is applied to CSS #1 of cell #1, USS #3 of cell #1, and USS #4 of cell #1, and 2nd QCL is applied to USS #2 of cell #1.

### {Option 3-2}

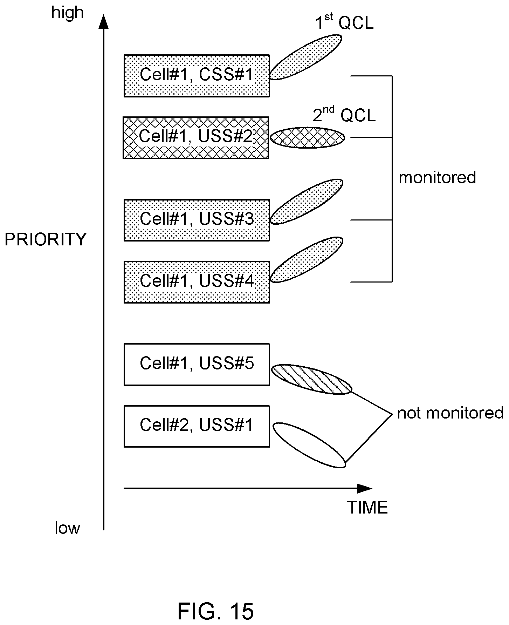

Also when PDCCH repetition of an existing system (for example, Rel. 17) (for example, linking of PDCCH search spaces) is not configured, PDCCH reception may be supported based on two QCL rules (for example, 1st QCL/2nd QCL) (see FIG. 15).

A rule for selecting two QCLs in this case may be selected/controlled based on a given order (or priority order). The given order (or priority order) may be CSS > USS, CC with a lower index (for example, a lower CC index) > CC with a higher index (for example, a higher CC index), and a search space set with a lower index (for example, lower SS set index) > search space set with a higher index (for example, a higher SS set index).

The UE may determine two search space set indices, based on the given order (or priority order).

A way of determining priority levels may be preferentially selecting any or both of two indicated joint/DL TCI states.

For example, also when two indicated joint/DL TCI states are indicated, which of the indicated joint/DL TCI states is to be applied to each CORESET may be configured by an RRC parameter. To each CORESET corresponding to a CSS or the like, a TCI state configured for the CORESET may be applied without an indicated TCI state (for example, an indicated joint/DL TCI state) being applied. As described above, a case where different CORESETs use different TCI states may also be present in Rel. 18 or later versions.

Note that the third embodiment may be limited to a case where a UE can simultaneously buffer received signals in a plurality of TCIs/QCLs.

### <Supplements>

### {Notification of Information to UE}

Any notification of information (from a network (NW) (for example, a base station (BS))) to a UE (in other words, any reception, in a UE, of information from a BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or combinations of these.

In a case where the notification described above is performed by the MAC CE, the MAC CE may be identified by a new logical channel ID (LCID) being included in a MAC sub-header, the new logical channel ID being not defined in an existing specification.

In a case where the notification described above is performed by the DCI, the notification described above may be performed by using a specific field in the DCI, a radio network temporary identifier (RNTI) used to scramble a cyclic redundancy check (CRC) bit attached to the DCI, a format of the DCI, and the like.

Any notification of information to a UE in the above-described embodiments may be performed periodically, semi-persistently, or aperiodically.

### {Notification of Information from UE}

Any notification of information from a UE (to a NW) (in other words, any transmission/reporting, in a UE, of information to a BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.

In a case where the notification described above is performed by the MAC CE, the MAC CE may be identified by a new LCID being included in a MAC sub-header, the new LCID being not defined in an existing specification.

In a case where the notification described above is performed by the UCI, the notification described above may be transmitted by using a PUCCH or a PUSCH.

Any notification of information from a UE in the above-described embodiments may be performed periodically, semi-persistently, or aperiodically.

### {Regarding Application of Each Embodiment}

At least one of the above-described embodiments may be applied to a case where a specific condition is satisfied. The specific condition may be defined in a specification, or may be notified to the UE/BS by using higher layer signaling/physical layer signaling.

At least one of the above-described embodiments may be applied only to a UE that has reported a specific UE capability or that supports the specific UE capability.

The specific UE capability may indicate at least one of the following:
- supporting specific processing/operation/control/information (for example, switch between a single TRP and multi-TRP in a case of using a unified TCI state) for at least one of the above-described embodiments
- supporting notification of switch of a single TRP/multi-TRP by scheduling DCI

The specific UE capability described above may be capability applied across all the frequencies (commonly regardless of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied to a case where specific information associated with the above-described embodiments (or operation for the above-described embodiments) is configured/activated/triggered for the UE by higher layer signaling/physical layer signaling. For example, the specific information may be information indicating enabling of switch between a single TRP and multi-TRP in a case of using a unified TCI state(s), any RRC parameter for a specific release (for example, Rel. 18/19), or the like.

When not supporting at least one of the specific UE capabilities or not configured with the specific information, the UE may apply operation of Rel. 15/16/17, for example.

### (Supplementary Notes)

Regarding one embodiment of the present disclosure, the following supplementary notes of the invention will be given.

### {Supplementary Note 1-1}

A terminal including: a receiving section that receives downlink control information (DCI) indicating a unified Transmission Configuration Indication (TCI state) and at least one of a downlink (DL) channel and a DL reference signal scheduled or triggered by the DCI; and a control section that applies, when only one unified TCI state is indicated in a cell or a bandwidth part (BWP), the one unified TCI state to at least one of the DL channel and the DL reference signal, and applies, when indication of a plurality of unified TCI states is supported in the cell or the BWP, one or the plurality of unified TCI states of the plurality of unified TCI states to at least one of the DL channel and the DL reference signal.

### {Supplementary Note 1-2}

The terminal according to supplementary note 1-1, wherein the one unified TCI state is associated with a physical ID (PCI) of a serving cell.

### {Supplementary Note 1-3}

The terminal according to supplementary note 1-1 or 1-2, wherein, when the indication of a plurality of unified TCI states is supported in the cell or the BWP, the control section performs first reception processing, based on the plurality of unified TCI state and, performs second reception processing, based on a unified TCI state indicated by the DCI.

### {Supplementary Note 1-4}

The terminal according to any one of supplementary notes 1-1 to 1-3, wherein, when the indication of a plurality of unified TCI states is supported in the cell or the BWP, the control section switches reception processing to be applied between reception processing using one of the plurality of unified TCI states and reception processing using the plurality of unified TCI states.

### {Supplementary Note 2-1}

A terminal includes: a receiving section that receives at least one of a first downlink (DL) signal scheduled or triggered by first downlink control information (DCI) corresponding to a first control resource set pool index and a second downlink (DL) signal scheduled or triggered by second downlink control information (DCI) corresponding to a second control resource set pool index; and a control section that applies, when one unified Transmission Configuration Indication (TCI state) is indicated for each of the first control resource set pool index and the second control resource set pool index, both a first TCI state corresponding to the first control resource set pool index and a second TCI state corresponding to the second control resource set pool index or one of the first TCI state and the second TCI state, to the first DL signal or the second DL signal.

### {Supplementary Note 2-2}

The terminal according to supplementary note 2-1, wherein the control section performs, on the first DL signal or the second DL signal, first reception processing, based on both the first unified TCI state and the second unified TCI state, and second reception processing, based on a unified TCI state indicated by the first DCI or the second DCI.

### {Supplementary Note 2-3}

The terminal according to supplementary note 2-1 or 2-2, wherein the control section switches reception processing to be applied between reception processing using one of the first unified TCI state and the second unified TCI state and reception processing using both the first unified TCI state and the second unified TCI state.

### {Supplementary Note 2-4}

The terminal according to any one of supplementary notes 2-1 to 2-3, wherein the control section applies both the first TCI state and the second TCI state to a first downlink control channel corresponding to the first DCI or a second downlink control channel corresponding to the second DCI.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

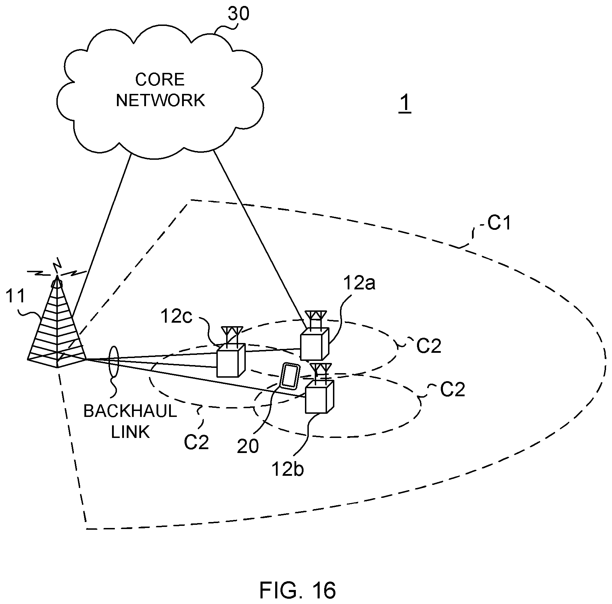

FIG. 16 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

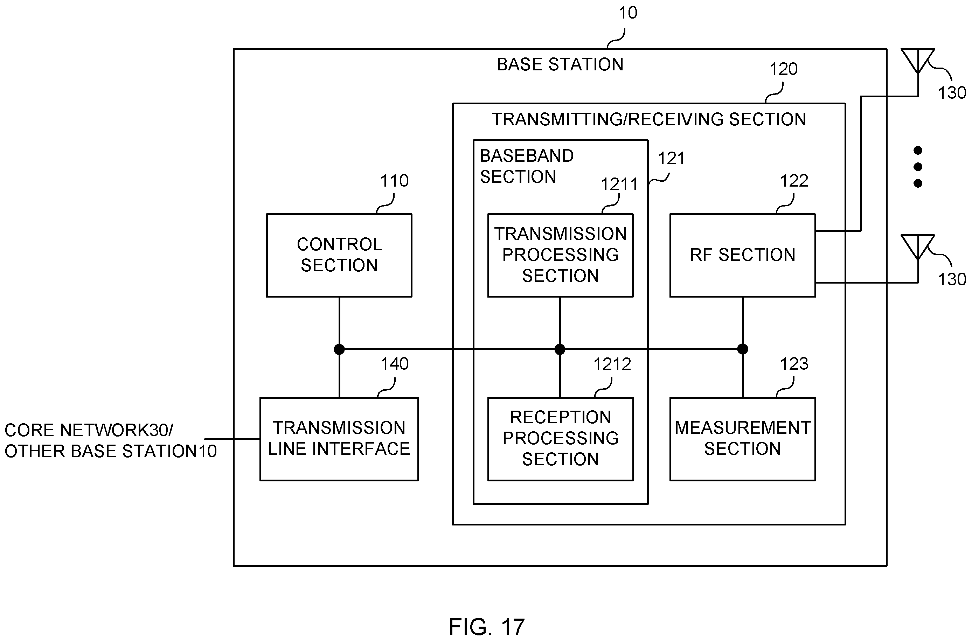

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit downlink control information (DCI) for indicating a unified Transmission Configuration Indication (TCI state) and at least one of a downlink (DL) channel and a DL reference signal scheduled or triggered by DCI. The control section 110 may apply, when only one unified TCI state is indicated in a cell or a bandwidth part (BWP), the one unified TCI state to at least one of the DL channel and the DL reference signal, and apply, when indication of a plurality of unified TCI states is supported in the cell or the BWP, one or the plurality of unified TCI states of the plurality of unified TCI states to at least one of the DL channel and the DL reference signal.

The transmitting/receiving section 120 may transmit at least one of a first downlink (DL) signal scheduled or triggered by first downlink control information (DCI) corresponding to a first control resource set pool index and a second downlink (DL) signal scheduled or triggered by second downlink control information (DCI) corresponding to a second control resource set pool index. The control section 110 may apply, when one unified Transmission Configuration Indication (TCI state) is indicated for each of the first control resource set pool index and the second control resource set pool index, both a first TCI state corresponding to the first control resource set pool index and a second TCI state corresponding to the second control resource set pool index or one of the first TCI state and the second TCI state, to the first DL signal or the second DL signal.

### (User Terminal)

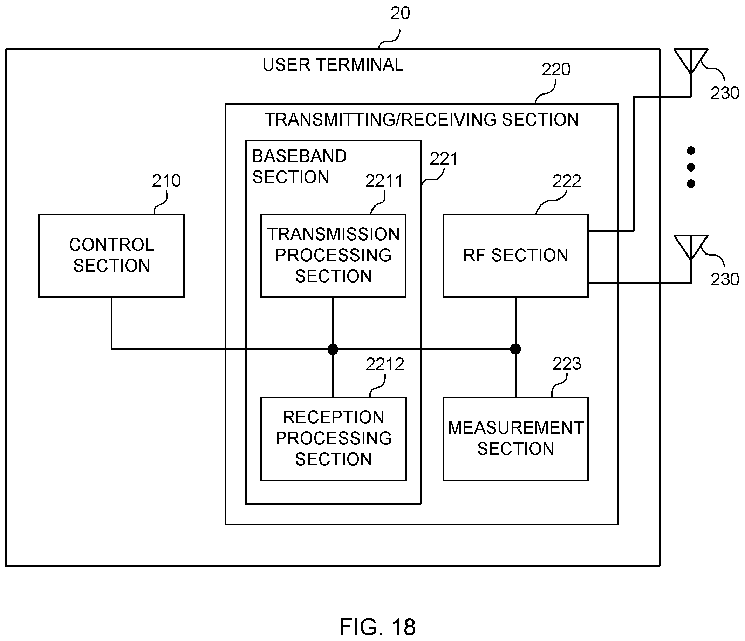

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information (DCI) for indicating a unified Transmission Configuration Indication (TCI state) and at least one of a downlink (DL) channel and a DL reference signal scheduled or triggered by DCI. The control section 210 may apply, when only one unified TCI state is indicated in a cell or a bandwidth part (BWP), the one unified TCI state to at least one of the DL channel and the DL reference signal, and apply, when indication of a plurality of unified TCI states is supported in the cell or the BWP, one or the plurality of unified TCI states of the plurality of unified TCI states to at least one of the DL channel and the DL reference signal.

One unified TCI state may be associated with a physical ID (PCI) of a serving cell. When the indication of a plurality of unified TCI states is supported in the cell or the BWP, the control section 210 may perform first reception processing, based on the plurality of unified TCI state and, perform second reception processing, based on a unified TCI state indicated by the DCI. When the indication of a plurality of unified TCI states is supported in the cell or the BWP, the control section 210 may switch reception processing to be applied between reception processing using one of the plurality of unified TCI states and reception processing using the plurality of unified TCI states.

The transmitting/receiving section 220 may receive at least one of a first downlink (DL) signal scheduled or triggered by first downlink control information (DCI) corresponding to a first control resource set pool index and a second downlink (DL) signal scheduled or triggered by second downlink control information (DCI) corresponding to a second control resource set pool index. The control section 210 may apply, when one unified Transmission Configuration Indication (TCI state) is indicated for each of the first control resource set pool index and the second control resource set pool index, both a first TCI state corresponding to the first control resource set pool index and a second TCI state corresponding to the second control resource set pool index or one of the first TCI state and the second TCI state, to the first DL signal or the second DL signal.

The control section 210 may perform, on the first DL signal or the second DL signal, first reception processing, based on both the first unified TCI state and the second unified TCI state, and second reception processing, based on a unified TCI state indicated by the first DCI or the second DCI. The control section 210 may switch reception processing to be applied between reception processing using one of the first unified TCI state and the second unified TCI state and reception processing using both the first unified TCI state and the second unified TCI state. The control section 210 may apply both the first TCI state and the second TCI state to a first downlink control channel corresponding to the first DCI or a second downlink control channel corresponding to the second DCI.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

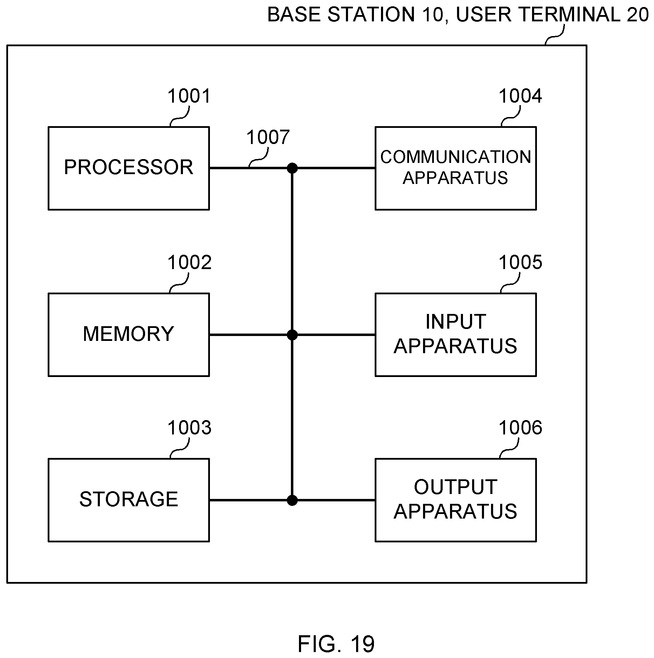

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

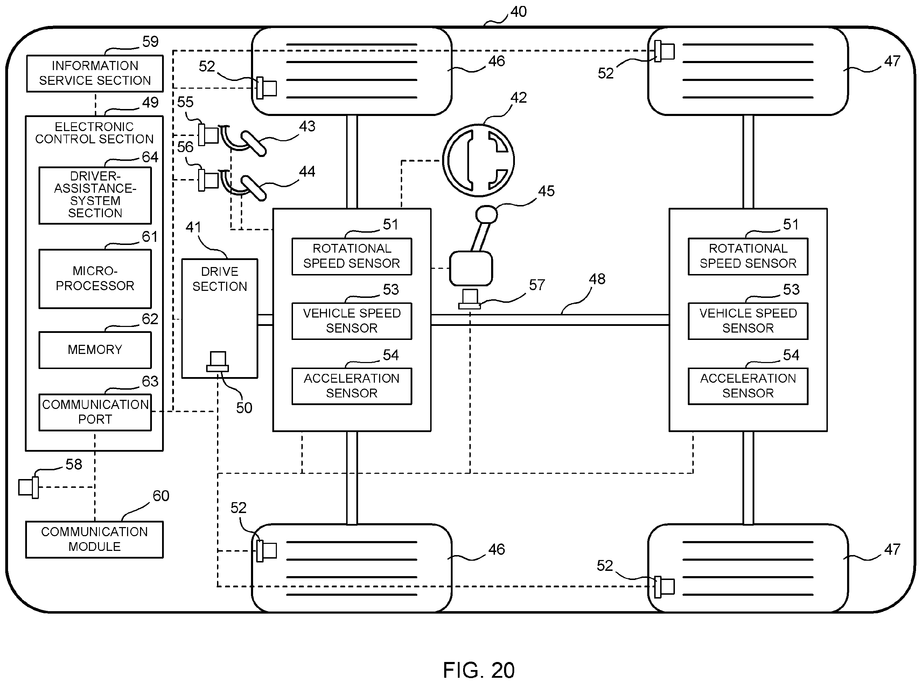

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives at least one of a first downlink (DL) signal scheduled or triggered by first downlink control information (DCI) corresponding to a first control resource set pool index and a second downlink (DL) signal scheduled or triggered by second downlink control information (DCI) corresponding to a second control resource set pool index; and
a control section that applies, when one unified Transmission Configuration Indication (TCI state) is indicated for each of the first control resource set pool index and the second control resource set pool index, both a first TCI state corresponding to the first control resource set pool index and a second TCI state corresponding to the second control resource set pool index or one of the first TCI state and the second TCI state, to the first DL signal or the second DL signal.

2. The terminal according to claim 1, wherein
the control section performs, for the first DL signal or the second DL signal, first reception processing, based on both the first unified TCI state and the second unified TCI state, and second reception processing, based on a unified TCI state indicated by the first DCI or the second DCI.

3. The terminal according to claim 1, wherein
the control section switches reception processing to be applied between reception processing using one of the first unified TCI state and the second unified TCI state and reception processing using both the first unified TCI state and the second unified TCI state.

4. The terminal according to claim 1, wherein
the control section applies both the first TCI state and the second TCI state to a first downlink control channel corresponding to the first DCI or a second downlink control channel corresponding to the second DCI.

5. A radio communication method for a terminal, the radio communication method comprising:
receiving at least one of a first downlink (DL) signal scheduled or triggered by first downlink control information (DCI) corresponding to a first control resource set pool index and a second downlink (DL) signal scheduled or triggered by second downlink control information (DCI) corresponding to a second control resource set pool index; and
applying, when one unified Transmission Configuration Indication (TCI state) is indicated for each of the first control resource set pool index and the second control resource set pool index, both a first TCI state corresponding to the first control resource set pool index and a second TCI state corresponding to the second control resource set pool index or one of the first TCI state and the second TCI state, to the first DL signal or the second DL signal.

6. A base station comprising:
a transmitting section that transmits at least one of a first downlink (DL) signal scheduled or triggered by first downlink control information (DCI) corresponding to a first control resource set pool index and a second downlink (DL) signal scheduled or triggered by second downlink control information (DCI) corresponding to a second control resource set pool index; and
a control section that applies, when one unified Transmission Configuration Indication (TCI state) is indicated for each of the first control resource set pool index and the second control resource set pool index, both a first TCI state corresponding to the first control resource set pool index and a second TCI state corresponding to the second control resource set pool index or one of the first TCI state and the second TCI state, to the first DL signal or the second DL signal.
